# EUROPÄISCHE PATENTSCHRIFT

(11) **EP 3 587 181 B1**
(45) Veröffentlichungstag und Bekanntmachung des Hinweises auf die Patenterteilung: **16.12.2020**
(21) Anmeldenummer: 19181358.3
(22) Anmeldetag: 19.06.2019
(51) Int. Cl.: B60P 7/08

(54) **TRANSPORTFAHRZEUG**
TRANSPORT VEHICLE
VÉHICULE DE TRANSPORT

(30) Priorität: 29.06.2018 DE 202018103744 U
(43) Veröffentlichungstag der Anmeldung: 01.01.2020
(73) Patentinhaber: Westdeutscher Drahtseil-Verkauf Dolezych GmbH & Co. KG, 44147 Dortmund (DE)
(72) Erfinder: Schöbel, Uwe, 58730 Fröndenberg (DE)
(74) Vertreter: Andrejewski - Honke Patent- und Rechtsanwälte Partnerschaft mbB

(56) Entgegenhaltungen:
- DE-U1-202007 016 321
- DE-U1-202016 106 739
- US-A1- 2005 141 980
- US-B1- 8 757 946

## Beschreibung

Die Erfindung betrifft ein Transportfahrzeug, insbesondere einen LKW-Auflieger, mit einem von Bordwänden, einer Transportfläche sowie gegebenenfalls einer Dachfläche umgrenzten Laderaum, und mit wenigstens einer Quer-Sicherungsvorrichtung mit randseitigen Anschlagvorrichtungen zur positionsvariablen Festlegung eines Quer-Sicherungsmittels an sich gegenüberliegenden Längsstreben der Längsbordwände, wobei die jeweilige Anschlagvorrichtung einen die zugehörige Längsstrebe übergreifenden Haken sowie ein Anschlagelement zur Kopplung mit dem Quer-Sicherungsmittel als Bestandteil der Quer-Sicherungsvorrichtung aufweist, und wobei das Anschlagelement gegenüber dem an der Längsstrebe festgelegten Haken an-und abschwenkbar ausgebildet ist.

Üblicherweise werden Transportfahrzeuge und insbesondere LKW-Auflieger heutzutage ohne festen Aufbau realisiert und weisen als Bordwand in der Regel sogenannte Rungen, Spriegelbretter oder Einstecklatten in Verbindung mit einer Kunststoffplane als seitliche Begrenzung auf. Die Rungen sind dabei im Allgemeinen seitlich an die Transportfläche angeschlossen und erstrecken sich überwiegend vertikal. Demgegenüber werden die Einstecklatten bzw. Spriegelbretter zwischen den Rungen horizontal festgelegt, beispielsweise in an den Rungen ausgebildete Taschen eingesteckt. Vergleichbare Aufbauten können selbstverständlich auch bei anderen Transportfahrzeugen, insbesondere Zuganhängern, zum Einsatz kommen.

Im Rahmen der DE 10 2011 113 398 A1 wird eine Einstecklatte zur seitlichen Anordnung an einem planen Aufbau eines Nutzfahrzeuges beschrieben. Die der Ladefläche zugewandte Ladungsseite der Einstecklatte verfügt in diesem Zusammenhang über Anschlussmöglichkeiten für Querverbindungen. Als Querverbindung kommt bei der bekannten Lehre ein sogenanntes Airline-Schienensystem zum Einsatz. Der hierzu gehörige Aufbau ist komplex, weil die jeweilige Einstecklatte mit speziell hieran ausgeformten Anschlussmöglichkeiten für die zugehörige Querverbindung ausgerüstet werden muss. Dadurch ist ein universeller Einsatz und beispielsweise auch ein Austausch der zugehörigen Einstecklatten gegen systemfremde Einstecklatten nicht möglich.

Ein vergleichbares Transportfahrzeug wird in der US 4 161 145 beschrieben. In diesem Fall sind die Längsstreben der Längsbordwände nicht als Einstecklatten ausgebildet, sondern jeweils als Kabel oder Seile ausgeführt. An den Kabeln oder Seilen sind jeweils Klemmvorrichtungen festgelegt. Mithilfe der Klemmvorrichtungen lässt sich unter anderem ein quer zur Längserstreckung angeordnetes Sicherungsnetz positionsvariabel im Laderaum platzieren. Da heutzutage Transportfahrzeuge und insbesondere LKW-Auflieger in der Regel mit einem standardisierten Aufbau mit den zuvor bereits beschriebenen Rungen und Einstecklatten bzw. Spriegelbrettern ausgerüstet sind, handelt es sich wiederum um eine systemfremde Variante, die eine Kompatibilität nicht zulässt.

Im auf die Anmelderin zurückgehenden Stand der Technik nach der DE 20 2016 106 739 U1 wird so vorgegangen, dass die Anschlagvorrichtung nicht nur mit einem die jeweilige Längsstrebe übergreifenden Haken ausgerüstet ist. Sondern zusätzlich ist noch ein korrespondierendes Verriegelungselement für den Haken vorgesehen, bei dem es sich um einen Klemmhebel und speziell einen Exzenterhebel handelt. Dadurch wird der Haken lösbar an der betreffenden Längsstrebe festgelegt.

Im gattungsbildenden Stand der Technik nach der US 2005/0141980 A1 wird mit einem Sicherungsnetz gearbeitet, welches über zugehörige Anschlagvorrichtungen mit Längsstreben der Längsbordwände lösbar gekoppelt ist. Die Anschlagvorrichtung verfügt ausweislich der dortigen Fig. 8 über zwei Haken bzw. Flansche, mit deren Hilfe sie in die Längsstrebe eingreift. Die Haken bzw. Flansche sind mit einem Betätigungselement verbunden, welches seinerseits der Verlagerung eines sogenannten D-Ringes dient, an den wiederum das Netz angeschlossen ist. Daraus resultiert eine umständliche Handhabung.

Die Lehre nach der DE 20 2016 106 739 U1 hat sich in der Praxis zwar bewährt, lässt allerdings noch Raum für Verbesserungen. Denn es hat sich herausgestellt, dass auf diese Weise der Haken und auch das Anschlagelement als Bestandteil der Anschlagvorrichtung zwar einwandfrei an der zugehörigen Längsstrebe festgelegt und hiervon wieder gelöst werden können.

Da bei der Festlegung des genannten Quer-Sicherungsmittels beispielsweise mit einem Haken in der Öffnung des Anschlagelementes das Anschlagelement zusammen mit dem Haken bei der bekannten Lehre nach der DE 20 2016 106 739 U1 zu diesem Zeitpunkt bereits an der zugehörigen Längsstrebe fixiert ist, können sich Probleme beim Einfädeln des Hakens in die Öffnung ergeben, weil beispielsweise das zugehörige Quer-Sicherungsmittel unter Spannung steht. Das gilt erst recht für den Fall, dass nicht ein simpler Haken in eine zugehörige Öffnung eingefädelt werden soll, sondern vielmehr ein spezieller Adapter zum Einsatz kommt, wie er beispielsweise in Verbindung mit entsprechenden Schlüssellochöffnungen im Rahmen der EP 3 154 820 B1 der Anmelderin beschrieben wird. Hier setzt die Erfindung ein.

Der Erfindung liegt das technische Problem zugrunde, ein derartiges Transportfahrzeug so weiterzuentwickeln, dass die Handhabung und insbesondere die Kopplung der Anschlagvorrichtung mit dem zugehörigen Quer-Sicherungsmittel zur Realisierung der Quer-Sicherungsvorrichtung einfach, schnell und problemlos gelingt.

Zur Lösung dieser technischen Problemstellung ist ein gattungsgemäßes Transportfahrzeug im Rahmen der Erfindung dadurch gekennzeichnet, dass zu dem Haken ein Gegenhaken korrespondiert, sodass beide Haken zwischen sich die Längsstrebe aufnehmen.

Dadurch wird die Festlegung der Anschlagvorrichtung mit dem Haken an der zugehörigen Längsstrebe optimiert. Außerdem können beide Haken zwischen sich die Längsstrebe aufnehmen. Um an dieser Stelle eine Anpassung an unterschiedlich gestaltete Längsstreben hinsichtlich ihrer Querschnittsform, Breite und Tiefe zu erreichen, lassen sich die beiden Haken darüber hinaus zur Anpassung an unterschiedliche Längsstreben relativ zueinander verschieben. In diesem Zusammenhang versteht es sich, dass die beiden Haken nach Erreichen einer Endposition jeweils gegeneinander gesichert werden können, damit sich die Anschlagvorrichtung von der Längsstrebe nicht lösen kann.

In diesem Zusammenhang ist eine Drehachse für die Schwenkbewegung des Anschlagelementes gegenüber dem Haken im Allgemeinen im Bereich einer oberen Kante der Längsstrebe angeordnet. Auf diese Weise wird das Anschlagelement im Vergleich zu dem Haken gleichsam nach oben hin weggeschenkt, wobei sich ein zugehöriger Winkel in Richtung auf die Transportfläche des Transportfahrzeuges hin öffnet. Außerdem hat es sich bewährt, wenn das Anschlagelement gegenüber dem Haken verriegelbar ausgebildet ist. Zur Verriegelung kann das Anschlagelement mit einem Rastelement ausgerüstet sein. Das Rastelement wechselwirkt seinerseits mit einer Rastausnehmung am Haken. Dadurch kann das Anschlagelement gegenüber dem Haken problemlos abgeschwenkt werden, um beispielsweise das Quer-Sicherungsmittel hieran unschwer festlegen zu können.

Die abgeschwenkte Position des Anschlagelementes gegenüber dem Haken stellt dabei sicher, dass in diesem Zusammenhang auch relativ komplexe und am Quer-Sicherungselement wahlweise angebrachte Adapter einwandfrei in eine Öffnung am Anschlagelement eingeführt und hierin lösbar verriegelt werden können. Wie zuvor bereits erläutert, kann an dieser Stelle beispielhaft ein Adapter zum Einsatz kommen, wie er im Zusammenhang mit der zuvor bereits zitierten EP 3 154 820 B1 im Detail beschrieben wird. Selbstverständlich sind auch andere Möglichkeiten zur Kopplung des Quer-Sicherungselementes mit dem Anschlagelement von der Erfindung umfasst, beispielsweise simple Haken, Steckzapfen etc. als Befestigungselemente.

Jedenfalls lässt sich das Quer-Sicherungsmittel problemlos mit dem Anschlagelement verbinden, insbesondere wenn sich das Anschlagelement in seiner gegenüber dem Haken abgeschwenkten Position befindet. Nachdem folglich das Quer-Sicherungsmittel mit dem Anschlagelement in der abgeschwenkten Position gekoppelt worden ist, lässt sich das Anschlagelement anschließend an den an der Längsstrebe festgelegten Haken anschwenken. Zugleich sorgt in diesem Zusammenhang das das Anschlagelement verriegelnde Rastelement durch seinen Eingriff in die Rastausnehmung am Haken dafür, dass das Quer-Sicherungsmittel einwandfrei an der betreffenden Längsstrebe in der gewünschten Position festgelegt ist.

Der an der Längsstrebe festlegbare Haken ist zu diesem Zweck und im Detail laderauminnenseitig mit einem Ausleger zur Lagerung des Anschlagelementes hieran ausgerüstet. Das heißt, der zumeist umgekehrt U-förmige Haken verfügt an seiner dem Laderaum nach innen hin zugewandten Seite bzw. an dem entsprechenden Schenkel über den zuvor angesprochenen Ausleger. Der Ausleger dient seinerseits zur Lagerung des Anschlagelementes und folglich auch zur Definition der zugehörigen und im Bereich der oberen Kante der Längsstrebe angeordneten Drehachse.

In diesem Zusammenhang ist der Ausleger größtenteils U-förmig ausgebildet. Außerdem ist der Ausleger insgesamt so ausgestaltet, dass er zum Laderaum hin geöffnet ist. Das Anschlagelement kann demgegenüber komplementär zum Ausleger ebenfalls U-förmig ausgebildet sein. Auf diese Weise lässt sich die Auslegung insgesamt so treffen, dass das Anschlagelement in angeschwenktem Zustand an den Haken den Ausleger übergreift. Das heißt, der zum Laderaum hin geöffnete und U-förmige Ausleger wird von einem ebenfalls U-förmigen und komplementären Anschlagelement in angeschwenktem Zustand übergriffen, wobei das Anschlagelement entgegengesetzt, das heißt zur Längsstrebe hin geöffnet ist.

Dadurch formen der Ausleger und das Anschlagelement in angeschwenktem Zustand zusammengenommen einen jeweils stirnseitig offenen Quader bzw. sind in Kombination und im angeschwenktem Zustand quaderförmig ausgelegt. In Verbindung mit der im angeschwenktem Zustand zugleich realisierten Verriegelung zwischen dem Anschlagelement und dem Haken bzw. dem Ausleger wird dadurch eine besonders kompakte und verformungsfreie Anschlagvorrichtung zur Anbringung des Quer-Sicherungsmittel zur Verfügung gestellt, die über den Haken darüber hinaus einwandfrei an der zugehörigen Längsstrebe positionsvariabel festgelegt ist.

Das gegenüber dem Haken verschwenkbare Anschlagelement kann darüber hinaus noch mit wenigstens einer seitlichen Verlängerung ausgerüstet sein. Meistens sind zwei seitliche Verlängerungen vorgesehen. Außerdem schlägt die Erfindung vor, dass das Anschlagelement und/oder die beiden Verlängerungen jeweils mit Aufnahmen für das hierin lösbar eingreifende Befestigungselement des Quer-Sicherungsmittels ausgerüstet sind. Bei dem Befestigungselement des Quer-Sicherungsmittels handelt es sich um den zuvor bereits angesprochenen Haken oder auch den Adapter, wie er in der EP 3 154 820 B1 im Detail beschrieben wird.

Die Verlängerung bzw. die beiden Verlängerungen sind im Allgemeinen jeweils winklig an das Anschlagelement angeschlossen. Dadurch besteht die Möglichkeit, das Quer-Sicherungsmittel nicht nur gleichsam senkrecht im Vergleich zu den Längsstreben im Innern des Laderaumes zu orientieren, sondern die winklige Anordnung der beiden Verlängerungen des Anschlagelementes mit den zugehörigen Aufnahmen für die Befestigungselemente des Quer-Sicherungsmittels eröffnet darüber hinaus noch die Möglichkeit, das Quer-Sicherungsmittel insgesamt schräg verlaufend im Innern des Laderaums zu platzieren. Dadurch können auch beispielsweise komplexe und auf der Transportfläche zu transportierende Güter wie beispielsweise Fässer oder andere unregelmäßige Gegenstände einwandfrei transportiert und gesichert werden.

Schlussendlich sind die beiden Haken, das heißt der eigentliche Haken und der Gegenhaken, im Allgemeinen jeweils U-förmig ausgebildet. Außerdem ist die Längsstrebe meistens im Querschnitt rechteckförmig ausgebildet. Dadurch können die beiden Haken mit ihrer U-Form an die zugehörige Längsstrebe angepasst werden. Es versteht sich, dass der Haken und der Gegenhaken gegebenenfalls austauschbar gestaltet sind, um eine Anpassung an unterschiedliche Längsstreben bzw. unterschiedliche Tiefen der Längsstreben zur Verfügung zu stellen. Da die Längsstreben jedoch im allgemeinen über eine übereinstimmende Tiefe und lediglich unterschiedliche Breiten verfügen, reicht in der Regel die Möglichkeit zur Anpassung an unterschiedliche Längsstreben derart aus, dass sich die beiden Haken zueinander verschieben lassen.

Bei dem Quer-Sicherungsmittel handelt es sich schließlich um ein solches, welches mit wenigstens zwei sich gegenüberliegenden randseitigen Befestigungsmitteln ausgerüstet ist. Die Befestigungsmittel lassen sich dabei lösbar in den zugehörigen Aufnahmen im Anschlagelement oder der korrespondierenden Verlängerung verriegeln. Darüber hinaus kann das Quer-Sicherungsmittel grundsätzlich starr ausgelegt sein. Im Regelfall ist das Quer-Sicherungsmittel jedoch flexibel ausgebildet. Hier empfehlen sich Ausführungsformen wie beispielsweise ein Einfachgurt, ein Mehrfachgurt, ein Sicherungsnetz einzeln oder in Kombination, wie dies mit Bezug zur Figurenbeschreibung insgesamt noch näher erläutert wird.

Im Ergebnis wird ein Transportfahrzeug zur Verfügung gestellt, welches eine einfache und funktionssichere Kopplung der Quer-Sicherungsvorrichtung mit der jeweils zugehörigen randseitigen Anschlagvorrichtung ermöglicht. Dazu setzt sich die Anschlagvorrichtung im Wesentlichen aus dem die zugehörige Längsstrebe übergreifenden Haken sowie dem gegenüber dem an der Längsstrebe festgelegten Haken an- und abschwenkbar ausgebildeten Anschlagelement zusammen. Das Anschlagelement bzw. zugehörige Verlängerungen des Anschlagelementes sind zu diesem Zweck mit Ausnehmungen ausgerüstet, in welche das Quersicherungsmittel mit Befestigungselementen lösbar eingreift.

Auf diese Weise lässt sich das Quer-Sicherungsmittel beispielsweise in abgeschwenktem Zustand des Anschlagelementes gegenüber dem Haken mit dem Anschlagelement koppeln. Im Anschluss daran wird dann das Anschlagelement an den Haken angeschwenkt und mit dem Haken verriegelt, so dass hierbei im Regelfall zugleich auch das flexible Quer-Sicherungsmittel gespannt wird und seine gewünschte Form einnimmt.

Auf diese Weise können einerseits ganz unterschiedlich ausgelegte Längsstreben mit verschiedenen Querschnitten und Abmessungen zum Einsatz kommen. Außerdem fungiert das an- und abschwenkbar gestaltete Anschlagelement gegenüber dem an der Längsstrebe festgelegten Haken als insgesamt Spannhebelmechanik und sorgt dafür, dass der Adapter oder allgemein ein Befestigungselement des Quer-Sicherungsmittels so wenig Platz wie möglich im Laderaum einnimmt. Dadurch wird zugleich auch eine Beschädigung durch beispielsweise Anecken bei Beladung vermieden. Auch wird das Beladen insgesamt vereinfacht, weil der Adapter bzw. das Befestigungselement diesen Vorgang nicht stört. Das alles gelingt besonders einfach, funktionssicher und mit wenigen Handgriffen, so dass hierin die wesentlichen Vorteile zu sehen sind.

Im Folgenden wird die Erfindung anhand einer lediglich ein Ausführungsbeispiel darstellenden Zeichnung näher erläutert; es zeigen:
- Fig. 1: ein erfindungsgemäßes Transportfahrzeug in der Ausführungs-form als LKW-Auflieger in einer Übersicht,
- Fig. 2: eine Seitenansicht der Längsstrebe mit der daran angebrachten Anschlagvorrichtung sowie dem Anschlagelement in gegenüber dem Haken abgeschwenkten Zustand,
- Fig. 3: den Gegenstand nach der Fig. 2 mit dem Anschlagelement in angeschwenktem Zustand an den Haken und zusätzlich angedeutetem Quer-Sicherungsmittel,
- Fig. 4: eine Aufsicht von oben auf den Gegenstand nach der Fig. 3 teilweise im Schnitt und
- Fig. 5: eine Ansicht auf den Gegenstand nach der Fig. 3 aus Richtung X.

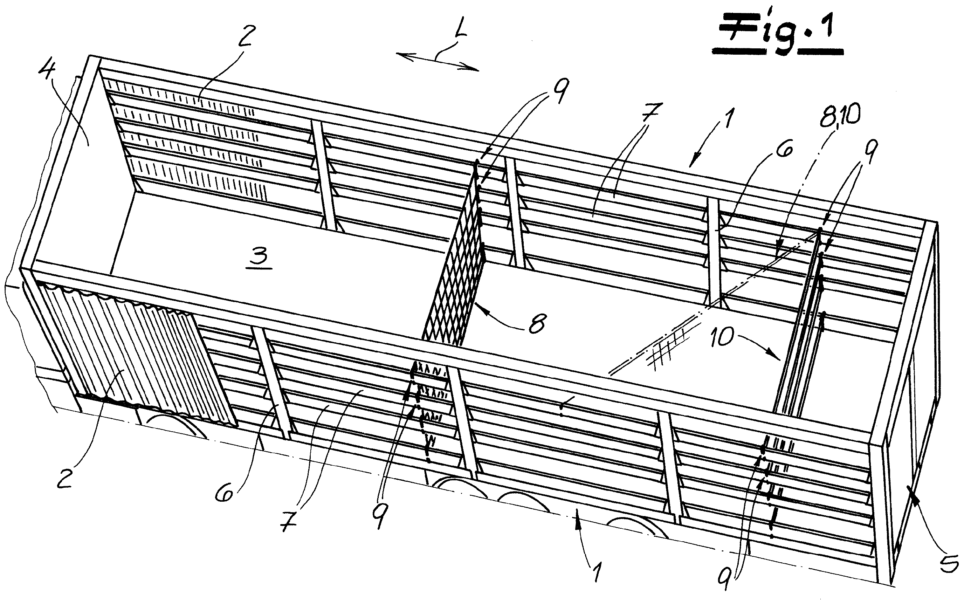

In den Figuren ist ein Transportfahrzeug dargestellt, bei dem es sich um einen LKW-Auflieger handelt. In der Fig. 1 ist ein sogenannter "Curtainsider" dargestellt, dessen beide Längsbordwände 1 mit einer Schiebeplane 2 ausgerüstet sind. Auf diese Weise kann der dargestellte LKW-Auflieger beispielsweise von der Seite her be- und entladen werden.

Die beiden Bordwände bzw. Längsbordwände definieren in Verbindung mit einer Transportfläche 3 sowie einer nicht dargestellten und optionalen Dachfläche einen hiervon umgrenzten Laderaum 1, 3, 4, 5. Tatsächlich wird der Laderaum zusätzlich zu den beiden Längsbordwänden 1 von einer frontseitigen festen Bordwand 4 und einer rückwärtigen Bordwand 5 in Gestalt von Ladeklappen ergänzend umgrenzt und definiert. Das gilt selbstverständlich nur beispielhaft und nicht einschränkend. Denn ebenso kann es sich bei dem in der Fig. 1 dargestellten Transportfahrzeug grundsätzlich auch um einen Zuganhänger handeln, was jedoch nicht gezeigt ist.

Die beiden Längsbordwände 1 weisen neben der Schiebeplane 2 randseitig der Transportfläche 3 angeordnete Vertikalstreben bzw. Rungen 6 auf. Außerdem sind jeweils zwischen den auf der Transportfläche 3 randseitig aufstehenden Vertikalstreben bzw. Rungen 6 jeweils mehrere Längsstreben 7 bzw. Spriegelbretter angeordnet, die sich überwiegend horizontal erstrecken.

Während die Vertikalstreben bzw. Rungen 6 fest mit der Transportfläche 3 bzw. einem Chassis des dargestellten LKW-Aufliegers gekoppelt sind, lassen sich die einzelnen Längsstreben 7 entfernen und ggf. austauschen. Auf diese Weise kann durch Zurückschieben der Schiebeplane 2 entsprechend der Darstellung in der Fig. 1 die Transportfläche 3 des LKW-Aufliegers von der Seite her beladen werden. Das ist grundsätzlich bekannt und wird in der Praxis vielfach umgesetzt.

Die Fig. 1 macht darüber hinaus deutlich, dass der LKW-Auflieger zusätzlich mit einer Quer-Sicherungsvorrichtung 8, 9; 10, 9 ausgerüstet ist. Die Quer-Sicherungsvorrichtung 8, 9; 10, 9 setzt sich ihrerseits aus einem Quer-Sicherungsmittel 8, 10 und randseitigen Anschlagvorrichtungen 9 zusammen. Tatsächlich sind an dieser Stelle und im Rahmen der Fig. 1 zwei verschiedene Ausführungsformen des Quer-Sicherungsmittels 8, 10 realisiert. Beiden Quer-Sicherungsmitteln 8, 10 ist gemein, dass sie jeweils flexibel und nicht starr ausgelegt sind. Dadurch führt ein etwaiges und auf der Transportfläche 3 beobachtetes Verrutschen der Ladung nicht zu einer Beschädigung des betreffenden Quer-Sicherungsmittels 8, 10 und damit auch nicht zu einer Beschädigung der Quer-Sicherungsvorrichtung 8, 9; 10, 9.

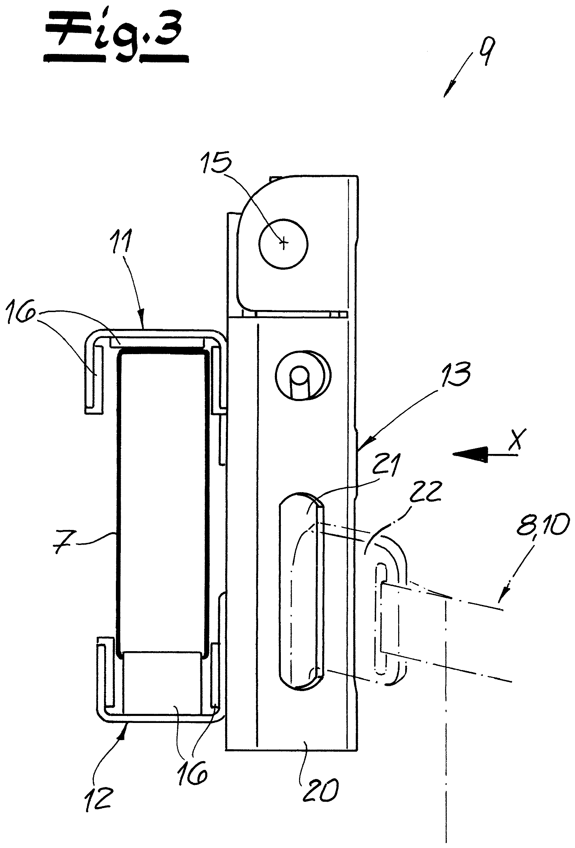

Tatsächlich handelt es sich bei dem Quer-Sicherungsmittel 8 um ein Sicherungsnetz 8 wie es in der Fig. 1 und 3 im Detail angedeutet ist. Bei dem weiteren Quer-Sicherungsmittel 10 handelt es sich demgegenüber um einen Mehrfachgurt 10, der lediglich in der Fig. 1 wiedergegeben wird.

Die beiden Quer-Sicherungsmittel 8, 10 sind jeweils mit den randseitigen Anschlagvorrichtungen 9 lösbar gekoppelt, die ihrerseits an den Längsstreben 7 lösbar festgelegt sind. Mithilfe der betreffenden Anschlagvorrichtung 9 lässt sich das jeweilige Quer-Sicherungsmittel 8, 10 und folglich auch die Quer-Sicherungsvorrichtung 8, 9; 10, 9 insgesamt positionsvariabel an den sich gegenüberliegenden Längsstreben 7 der Längsbordwände 1 festlegen. Zu diesem Zweck kann die jeweilige Anschlagvorrichtung 9 in praktisch beliebiger Längsposition entlang der in Fig. 1 angedeuteten Längsrichtung L entlang der zugehörigen Längsstrebe 7 verschoben und festgelegt werden. Das heißt, im Rahmen der Erfindung ist nicht nur eine in der Fig. 1 dargestellte und größtenteils quer zu den jeweiligen Längsbordwänden 1 orientierte Ausrichtung der Quer-Sicherungsmittel 8, 10 möglich. Sondern die Quer-Sicherungsmittel 8, 10 können grundsätzlich auch "schräg" verlaufen, wie dies in der Fig. 1 strichpunktiert angedeutet ist.

In jedem Fall lässt sich der Laderaum 1, 3, 4, 5 in seiner Längsrichtung L flexibel segmentieren, denn das betreffende Quer-Sicherungsmittel 8,10 mit den jeweils zugehörigen Anschlagvorrichtungen 9 kann positionsvariabel an den sich gegenüberliegenden Längsstreben 7 des Laderaumes 1, 3, 4, 5 festgelegt werden. Auf diese Weise lassen sich wechselnde Größen des Ladegutes problemlos abbilden und das Ladegut wird dennoch zugleich einwandfrei gesichert.

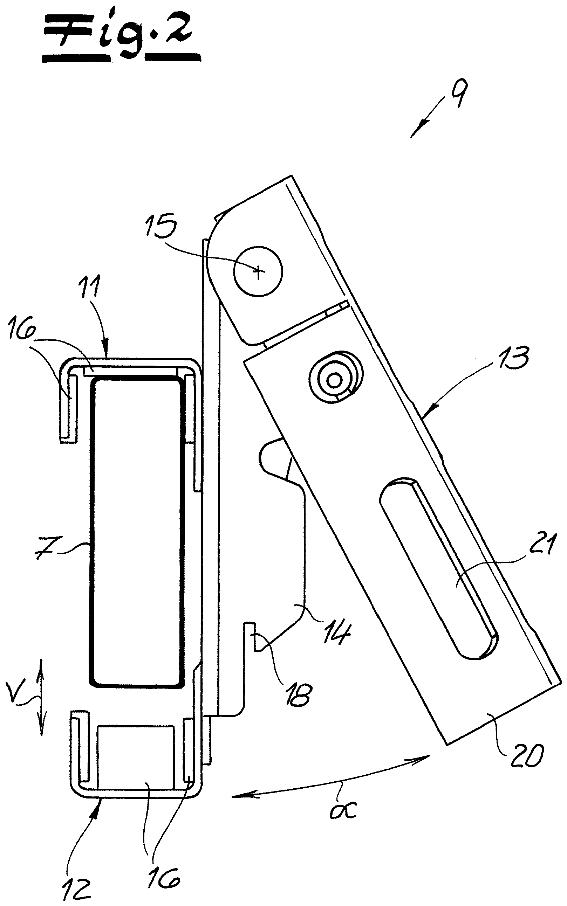

In den Figuren 2 bis 5 ist nun die realisierte Anschlagvorrichtung 9 im Detail dargestellt. Man erkennt, dass die Anschlagvorrichtung 9 einen die jeweiligen Längsstrebe 7 übergreifenden Haken 11 aufweist. Nach dem Ausführungsbeispiel ist sowohl ein kopfseitig der Längsstrebe 7 angeordneter Haken 11 als auch ein zugehöriger Gegenhaken 12 realisiert. Beide Haken 11, 12 sind im Ausführungsbeispiel jeweils U-förmig gestaltet. Das lässt sich darauf zurückführen, dass die Längsstrebe 7 als Rechteckhohlprofilstange ausgebildet ist, die beispielsweise aus Aluminium (oder auch aus Kunststoff) hergestellt ist oder werden kann.

Um die Längsstrebe 7 zwischen den beiden Haken 11, 12 einwandfrei fixieren zu können, sind die beiden Haken 11, 12 relativ zueinander verschiebbar ausgebildet. Außerdem verfügen sie über eine jeweils gleiche bzw. komplementäre U-förmige Gestaltung. Die relative Verschieblichkeit wird im Ausführungsbeispiel und nicht einschränkend so realisiert, dass der kopfseitig der Längsstrebe 7 platzierte Haken 11 zusätzlich mit einem Ausleger 14 ausgerüstet ist, gegenüber dem ein Anschlagelement 13 unter Berücksichtigung einer Drehachse 15 schwenkbar gelagert ist.

Das heißt, der Haken 11 verfügt zunächst einmal über den angeschlossenen Ausleger 14. Der Ausleger 14 ist nun seinerseits mit einer Führung für den demgegenüber verschiebbaren Gegenhaken 12 ausgerüstet. Auf diese Weise kann der Gegenhaken 12 eine in der Fig. 2 angedeutete Verschiebung entlang des Auslegers 14 vollführen und lässt sich die zuvor bereits angesprochene Anpassung an den Querschnitt der Längsstrebe 7 realisieren. Dazu kann der Gegenhaken 12 im Ausführungsbeispiel und nicht einschränkend in einer Vertikalrichtung V verschoben werden. Nachdem die Längsstrebe 7 zwischen den beiden Haken 11, 12 aufgenommen worden ist, lässt sich der Gegenhaken 12 gegenüber dem Ausleger 14 lösbar festlegen, welcher seinerseits mit dem Haken 11 fest gekoppelt ist. In der Fig. 2 zusätzlich noch angedeutete Abstandsstücke 16 innenseitig der genannten Haken 11, 12 sorgen in diesem Zusammenhang dafür, dass auch unterschiedlich gestaltete Längsstreben 7 einwandfrei festgelegt werden. Die Abstandsstücke 16 mögen zu diesem Zweck zusätzlich noch aus einem gummiartigen Material hergestellt sein, um eine rutschsichere Festlegung der Anschlagvorrichtung 9 in der gewünschten Position in Längsrichtung L des Laderaumes 1, 3, 4, 5 an der zugehörigen Längsstrebe 7 zu ermöglichen, wie dies einleitend bereits beschrieben wurde.

Wie bereits erläutert, ist das Anschlagelement 13 gegenüber dem an der Längsstrebe 7 festgelegten Haken 11 an- und abschwenkbar ausgebildet. Dabei findet sich die in diesem Zusammenhang realisierte Drehachse 15 des Anschlagelementes 13 gegenüber dem Haken 11 im Bereich einer oberen Kante der Längsstrebe 7, wie man insbesondere bei einem Vergleich der Darstellung in den Figuren 2 und 3 erkennt. Tatsächlich stellt die Fig. 2 den abgeschwenkten Zustand des Anschlagelementes 13 gegenüber dem Haken 11 dar, wohingegen in der Fig. 3 das Anschlagelement 3 an den Haken 11 angeschwenkt ist.

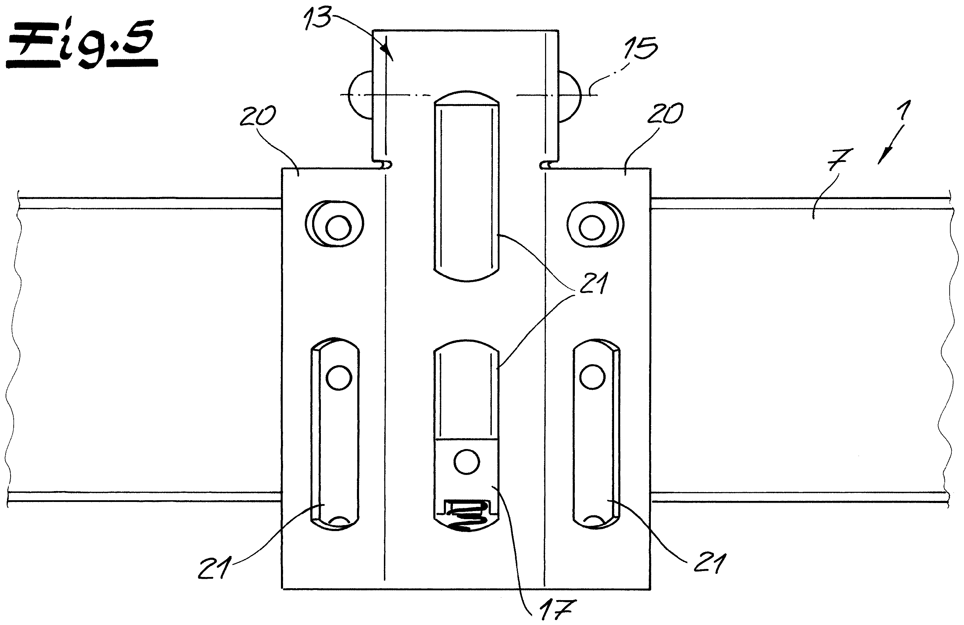

Nach dem Ausführungsbeispiel wird das Anschlagelement 13 im Detail gegenüber dem Ausleger 14 an- und abgeschwenkt, der seinerseits an den Haken 11 angeschlossen ist. Das Anschlagelement 13 ist darüber hinaus gegenüber dem Haken 11 verriegelbar ausgebildet. Zu diesem Zweck verfügt das Anschlagelement 13 über ein gegen Federkraft verschiebbares Rastelement 17, welches man am besten in der Fig. 5 erkennt. Das Rastelement 17 wechselwirkt mit einer Rastausnehmung 18 am Haken bzw. an dessen Ausleger 14. Das macht die Fig. 2 deutlich.

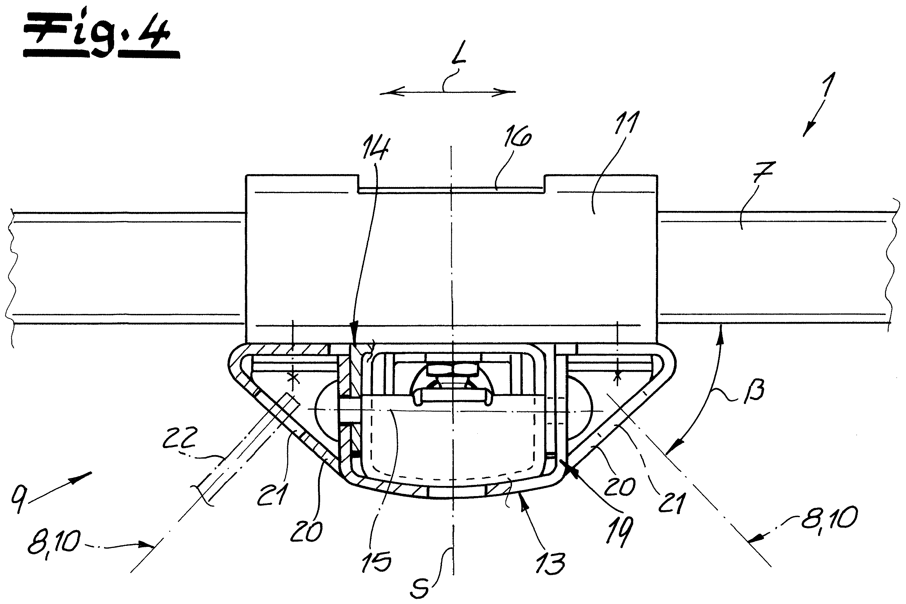

Auf diese Weise lässt sich das Anschlagelement 13 lösbar mit dem Haken 11 bzw. dessen Ausleger 14 und folglich der Längsstrebe 7 verriegeln. Außerdem ist die Auslegung im Ausführungsbeispiel so getroffen, dass das Anschlagelement 13 gegenüber dem an der Längsstrebe 7 festgelegten Haken 11 eine Schwenkbewegung derart vollführt, dass hierbei das Anschlagelement 13 gegenüber dem Haken 11 um einen Winkel α verschwenkt wird, der sich in Richtung auf die Transportfläche 3 des Laderaumes 1, 3, 4, 5 hin öffnet. Nach dem Ausführungsbeispiel werden in diesem Zusammenhang Schwenkwinkel α von ca. 30° bis 40° beobachtet, die sich dadurch einstellen, dass der Ausleger 14 mit entsprechenden und in der Fig. 4 gezeigten Anschlägen 19 für das Anschlagelement 13 ausgerüstet ist.

Der Ausleger 14 ist an den Haken 11 laderauminnenseitig zur Lagerung des Anschlagelementes 13 angeschlossen. Außerdem ist der Ausleger 14 im Querschnitt größtenteils U-förmig ausgebildet und zum Laderaum 1, 3, 4, 5 hin bzw. zu dessen Bodenfläche 3 hin geöffnet, wie man insbesondere in der Aufsicht bzw. Schnittdarstellung nach der Fig. 4 erkennt. Das Anschlagelement 13 ist komplementär zum Ausleger 14 ebenfalls U-förmig ausgebildet. Außerdem ist das Anschlagelement 13 so ausgelegt, dass es den Ausleger 14 in angeschwenktem Zustand übergreift, wie in der Fig. 4 dargestellt ist. Auf diese Weise definieren der Ausleger 14 und das Anschlagelement 13 in angeschwenktem Zustand des Anschlagelementes 13 insgesamt einen im Querschnitt rechteckförmigen Hohlquader, der besonders stabil ausgelegt ist.

Anhand der Fig. 4 erkennt man auch, dass das Anschlagelement 13 mit wenigstens einer seitlichen Verlängerung 20 ausgerüstet ist. Tatsächlich sind zwei seitliche Verlängerungen 20 vorgesehen, die jeweils winklig an das Anschlagelement 13 angeschlossen sind. Anhand des Ausführungsbeispiels und der Schnittdarstellung in der Fig. 4 wird deutlich, dass die beiden Verlängerungen 20 in Verbindung mit dem Anschlagelement 13 insgesamt im Querschnitt trapezförmig gestaltet sind. Das betreffende Trapez oder die Trapezform verfügt darüber hinaus noch über eine spiegelsymmetrische Auslegung im Vergleich zu einer in der Fig. 4 angedeuteten Symmetrieebene S.

Nach dem Ausführungsbeispiel sind sowohl das Anschlagelement 13 als auch die beidseitigen Verlängerungen 20 mit jeweils Aufnahmen 21 für hierin lösbar eingreifende Befestigungselemente 22 des Quer-Sicherungsmittels 8, 10 ausgerüstet. Das erkennt man bei einem Vergleich der Figuren 5 und 3. Auf diese Weise kann das betreffende Quer-Sicherungsmittel 8, 10 mithilfe des Befestigungselementes 22 zunächst in abgeschwenktem Zustand des Anschlagelementes 13 mit diesem respektive einer oder beiden Verlängerungen 20 lösbar gekoppelt werden. Nachdem folglich die Verbindung zwischen dem Anschlagelement 13 und dem Befestigungselement 22 und folglich dem Quer-Sicherungsmittel 8, 10 hergestellt worden ist, lässt sich das Anschlagelement 13 an den Haken 11 bzw. dessen Ausleger 14 anschwenken und mit diesem verriegeln.

Im Anschluss daran ist das Quer-Sicherungsmittel 8, 10 einsatzbereit und zugleich wunschgemäß gegenüber dem Laderaum 1, 3, 4, 5 orientiert. Dabei eröffnen die jeweils winklig an das Anschlagelement 13 angeschlossenen Verlängerungen 20 mit ihren zugehörigen Ausnehmungen 21 grundsätzlich sogar einen in den Fig. 1 und 4 angedeuteten Schrägverlauf des betreffenden Quer-Sicherungsmittels 8, 10. Der Schrägverlauf korrespondiert nach dem Ausführungsbeispiel zu einem Winkel β gegenüber der jeweils in Längsrichtung L orientierten Längsstrebe 7, welcher nach dem Ausführungsbeispiel ca. 40° bis 50° betragen kann. Das gilt selbstverständlich nicht einschränkend (vgl. Fig. 4).

## Patentansprüche

1. Transportfahrzeug, insbesondere LKW-Auflieger, mit einem von Bordwänden (1, 4, 5), einer Transportfläche (3) sowie gegebenenfalls einer Dachfläche umgrenzten Laderaum (1, 3, 4, 5), und mit wenigstens einer Quer-Sicherungsvorrichtung (8, 9; 10, 9) mit randseitigen Anschlagvorrichtungen (9) zur positionsvariablen Festlegung eines Quer-Sicherungsmittels (8, 10) an sich gegenüberliegenden Längsstreben (7) der Längsbordwände (1), wobei die jeweilige Anschlagvorrichtung (9) einen die zugehörige Längsstrebe (7) übergreifenden Haken (11) sowie ein Anschlagelement (13) zur Kopplung mit dem Quer-Sicherungsmittel (8, 10) aufweist, und wobei das Anschlagelement (13) gegenüber dem an der Längsstrebe (7) festgelegten Haken (11) an- und abschwenkbar ausgebildet ist,
**dadurch gekennzeichnet, dass**
zu dem Haken (11) ein Gegenhaken (12) korrespondiert, sodass beide Haken (11, 12) zwischen sich die Längsstrebe (7) aufnehmen.

2. Transportfahrzeug nach Anspruch 1, **dadurch gekennzeichnet, dass** eine Drehachse (15) des Anschlagelementes (13) gegenüber dem Haken (11) im Bereich einer oberen Kante der Längsstrebe (7) angeordnet ist.

3. Transportfahrzeug nach Anspruch 1 oder 2, **dadurch gekennzeichnet, dass** das Anschlagelement (13) gegenüber dem Haken (11) verriegelbar ausgebildet ist.

4. Transportfahrzeug nach Anspruch 3, **dadurch gekennzeichnet, dass** das Anschlagelement (13) mit einem Rastelement (17) ausgerüstet ist, welches mit einer Rastausnehmung (18) am Haken (11) wechselwirkt.

5. Transportfahrzeug einem der Ansprüche 1 bis 4, **dadurch gekennzeichnet, dass** der Haken (11) laderauminnenseitig mit einem Ausleger (14) zur Lagerung des Anschlagelementes (13) ausgerüstet ist.

6. Transportfahrzeug nach Anspruch 5, **dadurch gekennzeichnet, dass** der Ausleger (14) größtenteils U-förmig ausgebildet und zum Laderaum (1, 3, 4, 5) hin geöffnet ist.

7. Transportfahrzeug nach Anspruch 5 oder 6, **dadurch gekennzeichnet, dass** das Anschlagelement (13) komplementär zum Ausleger (14) ebenfalls U-förmig ausgebildet ist und den Ausleger (14) in angeschwenktem Zustand übergreift.

8. Transportfahrzeug nach einem der Ansprüche 1 bis 7, **dadurch gekennzeichnet, dass** das Anschlagelement (13) mit wenigstens einer seitlichen Verlängerung (20) ausgerüstet ist.

9. Transportfahrzeug nach Anspruch 8, **dadurch gekennzeichnet, dass** zwei seitliche Verlängerungen (20) vorgesehen sind.

10. Transportfahrzeug nach Anspruch 8 oder 9, **dadurch gekennzeichnet, dass** das Anschlagelement (13) und/oder die Verlängerungen (20) jeweils mit Aufnahmen (21) für ein hierin lösbar eingreifendes Befestigungselement (22) des Quer-Sicherungsmittels (8, 10) ausgerüstet sind.

11. Transportfahrzeug nach einem der Ansprüche 8 bis 10, **dadurch gekennzeichnet, dass** die Verlängerung (20) bzw. die beiden Verlängerungen (20) jeweils winklig an das Anschlagelement (13) angeschlossen sind.

12. Transportfahrzeug nach einem der Ansprüche 1 bis 11, **dadurch gekennzeichnet, dass** die beiden Haken (11, 12) zur Anpassung an unterschiedliche Längsstreben (7) relativ zueinander verschiebbar ausgebildet sind.

13. Transportfahrzeug nach einem der Ansprüche 1 bis 12, **dadurch gekennzeichnet, dass** die beiden Haken (11, 12) jeweils U-förmig und die Längsstrebe (7) im Querschnitt rechteckförmig ausgebildet sind.

14. Transportfahrzeug nach einem der Ansprüche 1 bis 13, **dadurch gekennzeichnet, dass** das Quer-Sicherungsmittel (8, 10) flexibel und beispielsweise als Einfachgurt, Mehrfachgurt (10), Sicherungsnetz (8) einzeln oder in Kombination ausgebildet ist.

## Claims

1. Transport vehicle, in particular an HGV trailer with a loading area (1, 3, 4, 5) enclosed by side walls (1, 4, 5), a transporting surface (3) as well as, if applicable, a roof area, and with at least one transverse securing device (8, 9; 10, 9) with marginal stop devices (9) for the position-variable fastening of a transverse securing means (8, 10) on opposite longitudinal bars (7) of the longitudinal side walls (1), wherein each stop device (9) comprises a hook (11) engaging over the corresponding longitudinal bar (7) as well as stop element (13) for connecting to the transverse securing means (8, 10), and wherein the stop element (13) is configured opposite the hook (11) fastened to the longitudinal bar (7) in a manner in which it can be swung in and out
**characterised in that**
a counter-hook (12) corresponds with the hook (11) so that both hooks (11, 12) take up the longitudinal bar (7) between them.

2. Transport vehicle according to claim 1 **characterised in that** an axis of rotation (15) of the stop element (13) is arranged opposite the hook (11) in the area of an upper edge of the longitudinal bar (7).

3. Transport vehicle according to claim 1 or 2 **characterised in that** the stop element (13) is designed in a lockable manner opposite the hook (11).

4. Transport vehicle according to claim 3 **characterised in that** the stop element (13) is fitted with a catch element (17) which interacts with a catch recess (18) on the hook (11).

5. Transport vehicle according to any one of claims 1 to 4, **characterised in that** on the inside of the loading space the hook (11) is equipped with an arm (14) for storing the stop element (13).

6. Transport vehicle according to claim 5 **characterised in that** the arm (14) is largely U-shaped and open toward the loading space (1, 3, 4, 5).

7. Transport vehicle according to claim 5 or 6 **characterised in that** complementary to the arm (14), the stop element (13) is also U-shaped and engages over the arm (14) in the swung-out state.

8. Transport vehicle according to any one of claims 1 to 7 **characterised in that** the stop element (13) is fitted with at least one lateral extension (20).

9. Transport vehicle according to claim 8 **characterised in that** two later extensions (20) are provided.

10. Transport vehicle according to claim 8 or 9 **characterised in that** the stop element (13) and/or the extensions (20) are each provided with recesses (21) for the fastening element (22) of the transverse securing means (8, 10) which detachably engages therein.

11. Transport vehicle according to any one of claims 8 to 10 **characterised in that** the extension (20) or the two extensions (20) are each attached to the stop element (13) at an angle.

12. Transport vehicle according to any one of claims 1 to 11 **characterised in that** the two hooks (11, 12) are designed to be displaceable relative to other for adaptation to differing longitudinal bars (7).

13. Transport vehicle according to any one of claims 1 to 12, **characterised in that** the two hooks (11, 12) are each U-shaped and the longitudinal bar (7) is rectangular in cross-section.

14. Transport device according to any one of claims 1 to 13 **characterised in that** the transverse securing means (8, 10) is flexible and can, for example, be designed individually or in combination as a single strap, multiple strap (10), securing strap (8).

## Revendications

1. Véhicule de transport, notamment semi-remorque, pourvu d'un espace de chargement (1, 3, 4, 5) délimité par des ridelles (1, 4, 5), par une surface de transport (3), ainsi que le cas échéant par une surface de toit, et pourvu d'au moins un dispositif de blocage transversal (8, 9 ; 10, 9) doté de dispositifs de butée (9) en bordure, destinés à immobiliser en position variable un moyen de blocage transversal (8, 10) sur des longerons (7) mutuellement opposés des ridelles longitudinales (1), le dispositif de butée (9) respectif comportant un crochet (11) qui chevauche le longeron (7) associé, ainsi qu'un élément de butée (13), destiné à être accouplé avec le moyen de blocage transversal (8, 10) et l'élément de butée (13) étant conçu de manière à pouvoir pivoter sur et à partir du crochet (11) immobilisé sur le longeron (7),
**caractérisé**
**en ce qu'**au crochet (11) correspond un crochet antagoniste (12), de sorte que les deux crochets (11, 12) accueillent entre eux le longeron (7).

2. Véhicule de transport selon la revendication 1, **caractérisé en ce qu'**un axe de rotation (15) de l'élément de butée (13) est placé au vis-à-vis du crochet (11), dans la région d'une arête supérieure du longeron (7).

3. Véhicule de transport selon la revendication 1 ou 2, **caractérisé en ce que** l'élément de butée (13) est conçu de manière à être verrouillable par rapport au crochet (11).

4. Véhicule de transport selon la revendication 3, **caractérisé en ce que** l'élément de butée (13) est équipé d'un élément d'enclenchement (17), lequel interagit avec un évidement d'enclenchement (18) sur le crochet (11).

5. Véhicule de transport selon l'une quelconque des revendications 1 à 4, **caractérisé en ce que** sur la face intérieure de l'espace de chargement, le crochet (11) est équipé d'une flèche (14) pour le logement de l'élément de butée (13).

6. Véhicule de transport selon la revendication 5, **caractérisé en ce que** la flèche (14) est conçue en majeure partie en forme de U et est ouverte en direction de l'espace de chargement (1, 3, 4, 5).

7. Véhicule de transport selon la revendication 5 ou 6, **caractérisé en ce que** l'élément de butée (13) est également conçu en forme de U, de manière complémentaire à la flèche (14) et chevauche la flèche (14) à l'état déployé.

8. Véhicule de transport selon l'une quelconque des revendications 1 à 7, **caractérisé en ce que** l'élément de butée (13) est équipé d'au moins un prolongement (20) latéral.

9. Véhicule de transport selon la revendication 8, **caractérisé en ce que** deux prolongements (20) latéraux sont prévus.

10. Véhicule de transport selon la revendication 8 ou 9, **caractérisé en ce que** l'élément de butée (13) et/ou les prolongements (20) sont équipés chacun de logements (21) pour un élément de fixation (22) du moyen de blocage transversal (8, 10) qui s'y engage de manière amovible.

11. Véhicule de transport selon l'une quelconque des revendications 8 à 10, **caractérisé en ce que** le prolongement (20) ou les deux prolongements (20) se raccordent chacun de manière angulaire sur l'élément de butée (13).

12. Véhicule de transport selon l'une quelconque des revendications 1 à 11, **caractérisé en ce que** les deux crochets (11, 12) sont conçus de manière à être déplaçables l'un par rapport à l'autre, pour s'adapter à différents longerons (7).

13. Véhicule de transport selon l'une quelconque des revendications 1 à 12, **caractérisé en ce que** les deux crochets (11, 12) sont conçus chacun en forme de U et le longeron (7) est conçu avec une section transversale de forme rectangulaire.

14. Véhicule de transport selon l'une quelconque des revendications 1 à 13, **caractérisé en ce que** le moyen de blocage transversal (8, 10) est conçu de sorte à être souple, par exemple sous la forme d'une sangle simple, d'une sangle multiple (10), d'un filet de sécurité (8), individuellement ou en association.
